# EUROPÄISCHE PATENTSCHRIFT

(11) **EP 1 346 804 B1**
(45) Veröffentlichungstag und Bekanntmachung des Hinweises auf die Patenterteilung: **20.02.2008**
(21) Anmeldenummer: 03005026.4
(22) Anmeldetag: 06.03.2003
(51) Int. Cl.: B27D 5/00, B23Q 3/155, B27C 9/00

(54) **Bearbeitungszentrum mit Bearbeitungseinheit und Versorgungseinheit**
Machining centre with a working unit and a supply unit
Centre d'usinage avec unité d'usinage et unité d'alimentation

(30) Priorität: 19.03.2002 DE 10212216
(43) Veröffentlichungstag der Anmeldung: 24.09.2003
(73) Patentinhaber: Homag Holzbearbeitungssysteme AG, 72296 Schopfloch (DE)
(72) Erfinder: Gringel, Martin, 72379 Hechingen (DE); Kalmbach, Kurt, 72275 Alpirsbach (DE)
(74) Vertreter: Elbertzhagen, Otto

(56) Entgegenhaltungen:
- DE-U- 9 414 904
- US-A- 5 107 910
- US-A- 5 300 006

## Beschreibung

Die Erfindung bezieht sich auf ein Bearbeitungszentrum für die Holzbearbeitung der im Gattungsbegriff des Patentanspruchs 1 näher bezeichneten Art. Ein derartige Bearbeitungszentrum ist aus DE 9 414 904-U bekannt.

Bei solchen Bearbeitungszentren handelt es sich um CNCgesteuerte Werkzeugmaschinen mit Werkzeugwechselsystemen oder um Kantenanleimmaschinen mit Kantenzuführungssystemen. Beide Maschinenarten können in ein und demselben Bearbeitungszentrum vereint sein, sofern an der Bearbeitungseinheit ein Kantenanleimaggregat aufgenommen werden kann und die Versorgungseinheit nicht nur ein Werkzeugmagazin sondern auch einen Speicher für das zu verarbeitende Kantenmaterial umfaßt. Bearbeitet werden in der Regel plattenförmige Werkstücke, die für den Möbel- und den Innenausbau bestimmt sind, und die ausgehend von einem Plattenrohling formatiert und entlang der Kanten bearbeitet werden.

Bearbeitungszentren der in Rede stehenden Art haben feststehende oder verfahrbare Ausleger oder Portale, die oberhalb eines Werkstücktisches eine Führungsbahn einer Maschinen-Grundachse, in der Regel der Y-Achse, haben. Entlang dieser Achse ist die Bearbeitungseinheit verfahrbar, die eine Arbeitsspindel mit einer Werkzeugaufnahme oder eine Aufnahme für ein Kantenanleimaggregat hat. Die mitfahrende Versorgungseinheit dient entsprechend entweder dem Werkzeugwechsel oder der Übergabe des Kantenmaterials an die Bearbeitungseinheit. Dafür sind unterschiedliche Wechsel- und Übergabesysteme bekannt.

Um lange Wege zwischen der Bearbeitungseinheit und der Versorgungseinheit zu vermeiden, welche die Wechsel- bzw. Übergabezeiten verlängern, hat man bereits die Versorgungseinheit mit der Bearbeitungseinheit mitfahrend angeordnet. Dafür hat man für beide Einheiten unterschiedliche Führungsbahnen vorgesehen, wobei auf der zugehörigen Führungsbahn die Versorgungseinheit mit einem eigenen Antrieb verfahrbar ist. Hierdurch kann für den Wechsel- bzw. Übergabevorgang die Versorgungseinheit nahe an die Bearbeitungseinheit herangefahren werden, um danach beide Einheiten gegebenenfalls für andere Zwecke wieder auseinanderzufahren, damit bei den von der Bearbeitungseinheit auszuführenden Bearbeitungsvorgängen die Versorgungseinheit nicht stört. Die Positionierung der Bearbeitungseinheit und der Versorgungseinheit relativ zu einander erfordert durch die notwendigen Antriebe oder Aktoren einen hohen Aufwand, der auch durch die Kompensation von Beschleunigungs- und Verzögerungskräften mittels entsprechender konstruktiver Maßnahmen bedingt ist.

Der Erfindung liegt die Aufgabe zugrunde, ein Bearbeitungszentrum der gattungsgemäßen Art zu schaffen, welches hinsichtlich der mit der Bearbeitungseinheit mitfahrenden Versorgungseinheit einfacher aufgebaut ist, zur Verkürzung der Wechsel- bzw. Übergabezeiten einen jeweils minimalen Abstand zwischen der Bearbeitungseinheit und der Wechseleinheit ermöglicht und ohne einen Vorschubantrieb für die Wechseleinheit auskommt.

Diese Aufgabe wird bei einem Bearbeitungszentrum der gattungsbildenden Art durch die Merkmale des Patentanspruchs 1 gelöst.

Für die Erfindung ist wesentlich, daß die Bearbeitungseinheit und die Versorgungseinheit miteinander mechanisch verbunden sind und die dafür vorgesehene Koppelvorrichtung die notwendige Abstandsänderung zwischen der Bearbeitungseinheit und der Versorgungseinheit zuläßt. So können für den Wechsel- oder Übergabevorgang die beiden Einheiten nahe zusammengefahren werden, während bei den Bearbeitungsvorgängen die beiden Einheiten auseinandergerückt sind, ohne daß die mechanische Verbindung zwischen den beiden Einheiten verlorengeht. So schleppt die angetriebene Bearbeitungseinheit die Versorgungseinheit bei den Bearbeitungsvorgängen mit, womit sich die Versorgungseinheit immer in optimaler Nähe zur Bearbeitungseinheit befindet. Dies wird noch dadurch begünstigt, daß die Bearbeitungseinheit und die Versorgungseinheit auf derselben Führungsbahn, die sich in Richtung einer der Hauptachsen des Bearbeitungszentrums erstreckt, gelagert sind.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
Fig. 1 die Draufsicht auf eine Bearbeitungseinheit sowie eine dieser benachbarten Versorgungseinheit eines Bearbeitungszentrums für die Holzbearbeitung in einer ersten Position mit maximalem Abstand voneinander und
Fig. 2 eine der Fig. 1 entsprechende Draufsicht auf die Bearbeitungseinheit und die Versorgungseinheit jedoch bei minimalem Abstand zueinander.

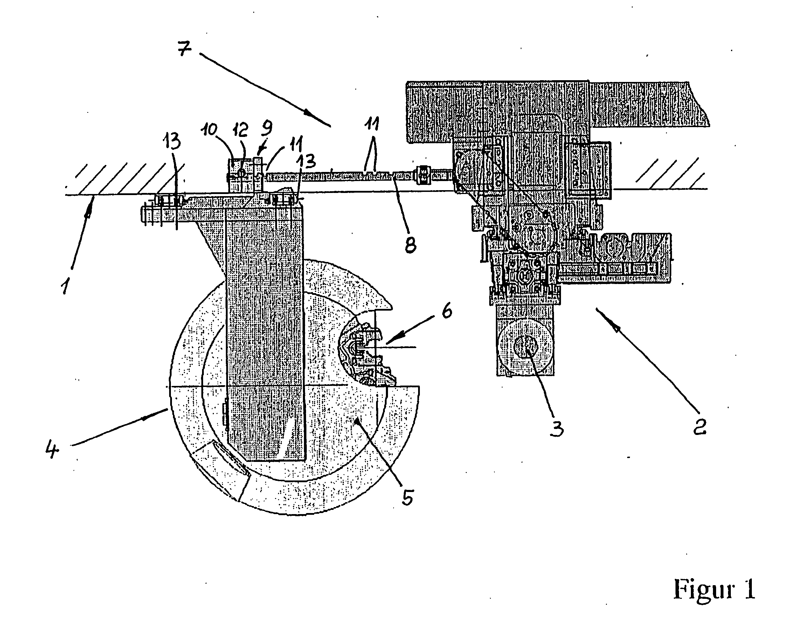

Fig. 1 zeigt im einzelnen eine Führungsbahn 1, die sich an einem nicht näher dargestellten Ausleger, Support oder an einem Portal an einer Werkzeug- und/oder Kantenanleimmaschine für die Holzbearbeitung befindet. Die Führungsbahn 1 erstreckt sich in Richtung einer der Grundachsen der Maschine, bei der es sich in der Regel um die sogenannte Y-Achse handelt. Entlang der Führungsbahn 1 ist eine Bearbeitungseinheit 2 verfahrbar, die für die spangebende Bearbeitung eine Arbeitsspindel 3 mit einer entsprechenden Werkzeugaufnahme hat und die in einer Richtung senkrecht zu der Y-Achse der Maschine zugestellt werden kann. Ebenso kann an der Bearbeitungseinheit 2 ein Kantenanleimaggregat angeordnet sein. Für die verschiedenen Bearbeitungsgänge werden unterschiedliche Werkzeuge und gegebenenfalls unterschiedliche Kantenmaterialien benötigt, wozu an der Bearbeitungseinheit 2 ein Werkzeugwechsel und/oder eine Übergabe von Kantenmaterial vorgenommen werden muß.

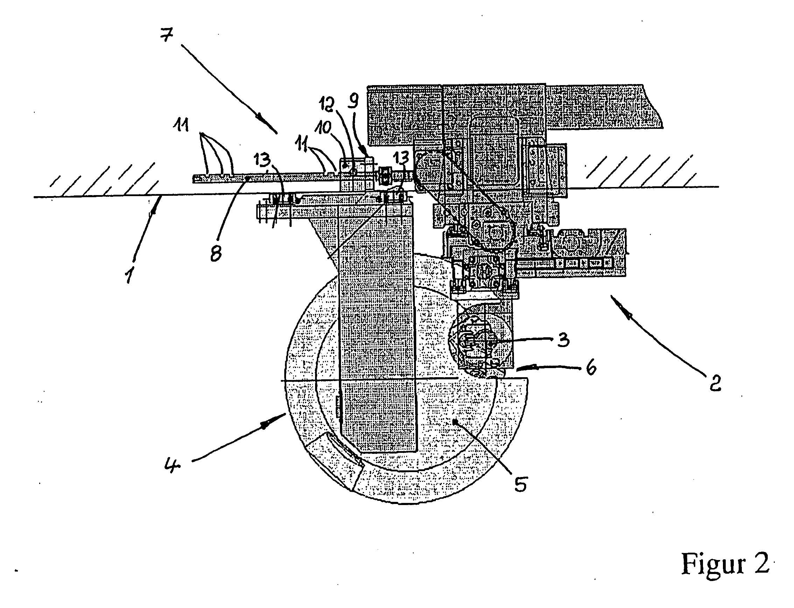

Dazu dient eine Versorgungseinheit 4, die ein Werkzeugmagazin 5 und/oder einen nicht dargestellten Speicher für ein Kantenmaterial aufweist. Das Werkzeugmagazin 5 hat an seiner Peripherie eine Übergabestelle 6, an die der ausgewählte Speicherplatz verfahren werden kann, um an die Arbeitsspindel 3 der Bearbeitungseinheit 2 ein Werkzeug zu übergeben oder von dort zu übernehmen. Dazu wird die Versorgungseinheit 4 aus der in Fig. 1 dargestellten Position, in der sie einen großen Abstand von der Bearbeitungseinheit 2 hat, der in Fig. 1 wiedergegeben ist, in eine Position nahe der Bearbeitungseinheit 2 verfahren, was sich aus Fig. 2 ergibt.

Die Versorgungseinheit 4 ist gemeinsam mit der Bearbeitungseinheit 2 auf derselben Führungsbahn 1 verfahrbar angeordnet, allerdings hat die Versorgungseinheit 4 keinen Eigenantrieb. Sie wird vielmehr von der angetriebenen Bearbeitungseinheit 2 ständig mitgenommen und ist mit dieser mittels einer Koppelvorrichtung 7 mechanisch so verbunden, daß zwischen der Bearbeitungseinheit 2 und der Versorgungseinheit 4 nicht nur die beiden extremen Abstände eingestellt werden können, die sich aus den Figuren 1 und 2 ergeben, sondern auch Zwischenabstände, falls dies erforderlich sein sollte.

Die Kuppelvorrichtung 7 weist als wesentliches Element eine Schleppstange 8 auf, die auch als Indexstange bezeichnet werden kann. Die Schleppstange 8 ist mit der Bearbeitungseinheit 2 fest verbunden und erstreckt sich parallel zur Führungsbahn 1. Als Aufnahme 9 zum Eintauchen oder Durchtauchen der Schleppstange 8 ist an der Versorgungseinheit 4 eine Öffnung oder Führung angeordnet, die es ermöglicht, daß sich die fest an der Bearbeitungseinheit 2 sitzende Schleppstange 8 relativ zu der Versorgungseinheit 4 verschieben kann. Damit bei vorgegebenem Abstand die Versorgungseinheit 4 relativ zur Bearbeitungseinheit 2 fixiert werden kann, ist an der Aufnahme 9 eine Arretiervorrichtung 10 angeordnet, die entsperrbar ist. Nur bei entsperrter Arretiervorrichtung 10 ist die Relativbewegung zwischen der Schleppstange 8 und der Versorgungseinheit 4 möglich, bei sperrender Arretiervorrichtung nimmt die Versorgungseinheit 4 realtiv zur Bearbeitungseinheit 2 eine feste Abstandsposition ein.

Vornehmlich in den beiden Endbereichen der Schleppstange 8, in denen die Fixierung der Versorgungseinheit 4 relativ zur Schleppstange 8 erfolgt, sind Indexkonturen 11 an der Schleppstange 8 vorgesehen. Diese Indexkonturen 11 sind als Kerben ausgeführt, die sich im wesentlichen in Richtung einer Durchmessersehne der Schleppstange 8 erstrecken. Die somit quer zur Längserstreckung der Schleppstange 8 angebrachten Indexkerben 11 wirken mit einem Indexglied 12 der Arretiervorrichtung 10 an der Versorungseinheit 4 zusammen.

Dieses Indexglied 12 ist in Gestalt eines axial verschieblichen Indexbolzens ausgeführt, der quer zur Schleppstange 8 verschieblich und formschlüssig in Eingriff mit einer der Indexkerben 11 an der Schleppstange 8 bringbar ist. Entsprechend der beim Ausführungsbeispiel 6 vorhandenen Indexkerben 11 an der Schleppstange 8 kann somit die Versorgungseinheit 4 in sechs verschiedenen Abstandspositionen relativ zur Bearbeitungseinheit 2 fixiert werden. Hierbei ist die Versorgungseinheit 4 zumindest dann entlang der Führungsbahn 1 verfahrbar, wenn sie sich nicht in einer der drei Wechselpositionen nahe der Bearbeitungseinheit 2, sondern in einer der drei Mitfahrpositionen befindet, in denen die Versorgungseinheit 4 soweit von der Bearbeitungseinheit 2 abgerückt ist, daß die von der Bearbeitungseinheit 2 auszuführenden Bearbeitungsvorgänge nicht behindert werden.

Dazu ist die Versorgungseinheit 4 ferner mit einer Feststellvorrichtung 13 versehen, um sie an der Führungsbahn 1 festlegen zu können. Die Feststellvorrichtung 13 ist als Klemmvorrichtung ausgebildet, damit an jeder Stelle der Führungsbahn 1 die Festlegung der Versorgungseinheit 4 vorgenommen werden kann. Daher ist man an diskrete Feststellpositionen der Versorgungseinheit 4 nicht gebunden. Die Feststellvorrichtung 13 und die Arretiervorrichtung 10 an der Versorgungseinheit 4 sind so aufeinander abgestimmt, daß die Arretiervorrichtung 10 dann entsperrt ist, wenn die Feststellvorrichtung 13 die Versorgungseinheit 4 an der Führungsbahn 1 fixiert.

Ausgehend von der in Fig. 1 dargestellten Abstandsposition erfolgt die Abstandsänderung zwischen der Bearbeitungseinheit 2 und der Versorgungseinheit 4 dadurch, daß die Versorgungseinheit 4 über die Feststellvorrichtung 13 an der Führungsbahn 1 fixiert und die Arretiervorrichtung 10 entsperrt wird. Danach fährt die Bearbeitungseinheit 2 über ihren Eigenantrieb in eine der Wechselpositionen an die Versorgungseinheit 4 heran, es kann sich um diejenige Wechselposition handeln, die in Fig. 2 dargestellt ist. Hiernach wird die Arretiervorrichtung 10 wieder in ihre Sperrlage gebracht, womit die neue Abstandsposition zwischen der Bearbeitungseinheit 2 und der Versorgungseinheit 4 fixiert ist. Beide Einheiten 2, 4 können während des Wechsel- oder Übergabevorgangs entweder an der betreffenden Stelle der Führungsbahn verbleiben oder grundsätzlich auch entlang der Führungsbahn 1 gemeinsam verfahren werden. Im letzteren Fall ist die Feststellvorrichtung 13 gelöst. Für das Auseinanderfahren der Bearbeitungseinheit 2 und der Versorgungseinheit 4 beispielsweise in diejenige Abstandsposition, die in Fig. 1 wiedergegeben ist, wird die Versorgungseinheit 4 über die Feststellvorrichtung 13 an der Führungsbahn 1 wieder fixiert, sofern sie nicht bereits wegen des Wechsel- oder Übergabevorgangs fixiert war. Anschließend wird die Arretiervorrichtung 10 an der Versorgungseinheit 4 gelöst, wonach die Bearbeitungseinheit 2 von der Versorgungseinheit 4 unter Mitnahme der Schleppstange 8 weggefahren wird, um eine der Mitfahrpositionen herzustellen, bei denen die Versorgungseinheit 4 den größeren Abstand von der Bearbeitungseinheit 2 hat. Ab dann kann die Bearbeitungseinheit 2 wiederum unter Mitnahme der nicht festgelegten Versorgungseinheit 4 die vorgesehenen Bearbeitungsvorgänge ausführen.

## Patentansprüche

1. Bearbeitungszentrum für die Holzbearbeitung mit einer entlang der Führungsbahn einer Maschinen-Grundachse mittels eines Antriebs verfahrbaren Bearbeitungseinheit (2) und ferner mit einer mit der Bearbeitungseinheit (2) mitfahrenden Versorgungseinheit (4), die ein Magazin (5) für Bearbeitungswerkzeuge und/oder Verarbeitungsmaterial hat und die in eine Wechsel- bzw. Übergabeposition an der Bearbeitungseinheit (2) verfahrbar ist,
**dadurch gekennzeichnet,**
**daß** die Bearbeitungseinheit (2) und die Versorgungseinheit (4) auf derselben Führungsbahn (1) der Maschinen-Grundachse angeordnet sind, wobei die Versorgungseinheit (4) ohne Eigenantrieb ausgeführt und mit der Bearbeitungseinheit (2) zwecks Mitschleppen mittels einer Koppelvorrichtung (7) verbunden ist, über welche die Bearbeitungseinheit (2) und die Versorgungseinheit (4) relativ zueinander in zumindest einer Mitfahrposition mit größerem Abstand voneinander und in zumindest einer Wechselposition mit kleinerem Abstand voneinander fixierbar sind.

2. Bearbeitungszentrum nach Anspruch 1,
**dadurch gekennzeichnet,**
**daß** die Koppelvorrichtung (7) eine Schleppstange (8) aufweist und die Bearbeitungseinheit (2) oder die Wechseleinheit (4) eine Aufnahme (9) hat, in welche die Schleppstange (8) eintaucht, wobei die betreffende Einheit (2 oder 4) zur Fixierung an der Schleppstange (8) bei dem jeweiligen Abstand zwischen den beiden Einheiten (2, 4) mit einer entsperrbaren Arretiervorrichtung (10) versehen ist.

3. Bearbeitungszentrum nach Anspruch 2,
**dadurch gekennzeichnet,**
**daß** die Versorgungseinheit (4) eine Feststellvorrichtung (13) aufweist, mit der die Versorgungseinheit (4) an der Führungsbahn (1) der Maschinen-Grundachse zwecks Veränderung des Abstandes zur Bearbeitungseinheit (2) durch deren Verfahren bei entsperrter Arretiervorrichtung (10) festlegbar ist.

4. Bearbeitungszentrum nach Anspruch 3,
**dadurch gekennzeichnet,**
**daß** die Feststellvorrichtung (13) der Versorgungseinheit (4) als Klemmvorrichtung ausgebildet ist.

5. Bearbeitungszentrum nach einem der Ansprüche 2 - 4,
**dadurch gekennzeichnet,**
**daß** die Schleppstange (8) für jede Abstandsposition zwischen der Bearbeitungseinheit (2) und der Versorgungseinheit (4) jeweils eine eingeformte Indexkontur (11) hat und die Arretiervorrichtung (10) an der betreffenden Einheit (2, 4) ein formschlüssig in jeweils eine dieser Indexkonturen (11) eingreifbares, entsprechend bewegliches Indexglied (12) aufweist.

6. Bearbeitungszentrum nach Anspruch 5,
**dadurch gekennzeichnet,**
**daß** die Indexkonturen (11) an der Schleppstange (8) als in Richtung einer Durchmessersehne sich erstrekkende Indexkerben ausgeführt sind.

7. Bearbeitungszentrum nach Anspruch 5 oder 6,
**dadurch gekennzeichnet,**
**daß** die Arretiervorrichtung (10) einen axial verschieblichen Indexbolzen als Indexglied (12) hat.

8. Bearbeitungszentrum nach Anspruch 7,
**dadurch gekennzeichnet,**
**daß** der Indexbolzen (12) der Arretiervorrichtung (10) im Bereich der Aufnahme (9) für die Schleppstange (8) angeordnet ist.

9. Bearbeitungszentrum nach einem der Ansprüche 2 - 8,
**dadurch gekennzeichnet,**
**daß** die Schleppstange (8) an der Bearbeitungseinheit (2) fest angeordnet ist und die Aufnahme (9) sowie die entsperrbare Arretiervorrichtung (10) an der Versorgungseinheit (4) angeordnet sind.

## Claims

1. Machining centre for machining wood, having a working unit (2) which can be moved along the guide path of a machine main axis by means of a drive and further having a supply unit (4) moving with the working unit (2), which supply unit (4) has a magazine (4) for machining tools and/or machining material and can be moved into an exchange or transfer position on the working unit (2),
**characterised in that**
the working unit (2) and the supply unit (4) are disposed on the same guide path (1) of the machine main axis, wherein the supply unit (4) does not have its own drive and is connected to the working unit (2), for the purpose of entrainment, by means of a coupling device (7), via which the working unit (2) and the supply unit (4) can be fixed relative to each other in at least one entraining position at a greater distance from each other and in at least one exchange position at a smaller distance from each other.

2. Machining centre according to claim 1,
**characterised in that**
the coupling device (7) comprises an entraining rod (8) and the working unit (2) or the exchange unit (4) has a recess (9), into which the entraining rod (8) is lowered, whereby the unit in question (2 or 4) is provided with a releasable locking device (10) for fixing to the entraining rod (8) with the respective distance between the two units (2, 4).

3. Machining centre according to claim 2,
**characterised in that**
the supply unit (4) comprises a fixing device (13), with which the supply unit (4) can be fixed to the guide path (1) of the machine main axis for the purpose of changing the distance from the working unit (2) by moving it when the locking device (10) is unlocked.

4. Machining centre according to claim 3,
**characterised in that**
the fixing device (13) of the supply unit (4) is formed as a clamping device.

5. Machining centre according to one of the claims 2 to 4, **characterised in that**
the entraining rod (8) has an incorporated index contour (11) for each distance position between the working unit (2) and the supply unit (4), and the locking device (10) comprises on the respective unit (2, 4) a correspondingly movable index member (12) which can engage in a shape-locking way in each of these index contours (11).

6. Machining centre according to claim 5,
**characterised in that**
the index contours (11) on the entraining rod (8) are formed as index notches extending across its diameter.

7. Machining centre according to claim 5 or 6,
**characterised in that**
the locking device (10) has an axially displaceable index pin as an index member (12).

8. Machining centre according to claim 7,
**characterised in that** the index pin (12) of the locking device (10) is disposed in the region of the recess (9) for the entraining rod (8).

9. Machining centre according to one of the claims 2 to 8, **characterised in that**
the entraining rod (8) is fixedly arranged on the working unit (2) and the recess (9) and the releasable locking device (10) are disposed on the supply unit (4).

## Revendications

1. Centre d'usinage pour le traitement du bois, avec une unité d'usinage (2) mobile le long de la voie de guidage d'un axe de base de la machine au moyen d'un entraînement et, de plus, avec une unité d'alimentation (4) qui, se déplaçant en commun avec l'unité d'usinage (2), présente un magasin (5) pour des outils de traitement et/ou des matériaux de travail, et qui peut être conduite à l'unité d'usinage (2), en position de changement, respectivement de transfert,
**caractérisé en ce que**
l'unité d'usinage (2) et l'unité d'alimentation (4) sont agencées sur la même voie de guidage (1) de l'axe de base de la machine, l'unité d'alimentation (4) étant réalisée sans entretien propre et reliée à l'unité d'usinage (2) aux fins de remorquage, au moyen d'un dispositif de couplage (7), par l'intermédiaire duquel l'unité d'usinage (2) et l'unité d'alimentation (4) peuvent être fixées par rapport l'une à l'autre dans au moins une position de déplacement en commun, à un grand intervalle l'une de l'autre, et dans au moins une position de changement, à un plus petit intervalle l'une de l'autre.

2. Centre d'usinage selon la revendication 1,
**caractérisé en ce que**
le dispositif de couplage (7) présente une barre de traction (8), et que l'unité d'usinage (2) ou l'unité d'alimentation (4) est pourvue d'un réceptacle (9) dans lequel la barre de traction (8) est introduite, l'unité concernée (2 ou 4) étant pourvue d'un dispositif d'arrêt (10) déblocable, pour la fixation à la barre de traction (8), à l'intervalle respectif entre les deux unités (2, 4).

3. Centre d'usinage selon la revendication 2,
**caractérisé en ce que**
l'unité d'alimentation (4) présente un dispositif de fixation (13) avec lequel l'unité d'alimentation (4) peut être fixée à la voie de guidage (1) de l'axe de base de la machine, aux fins de modification de la distance de l'unité d'usinage (2), par son déplacement, lorsque le dispositif d'arrêt (10) est débloqué.

4. Centre d'usinage selon la revendication 3,
**caractérisé en ce que**,
le dispositif de fixation (13) de l'unité d'alimentation (4) est réalisé sous la forme d'un dispositif de serrage.

5. Centre d'usinage selon l'une des revendications 2 à 4,
**caractérisé en ce que**
la barre de traction (8) présente, pour chaque intervalle de positionnement entre l'unité d'usinage (2) et l'unité d'alimentation (4), un contour d'indexation (11), et que le dispositif d'arrêt (10) présente, sur l'unité concernée (2, 4), un organe d'indexation (12) adéquatement mobile, qui peut s'emboîter respectivement dans l'un de ces contours d'indexation (11).

6. Centre d'usinage selon la revendication 5,
**caractérisé en ce que**,
les contours d'indexation (11) sur la barre de traction (8) sont exécutés sous la forme d'encoches d'indexation qui s'étendent dans la direction d'une corde diamétrale.

7. Centre d'usinage selon revendication 5 ou 6,
**caractérisé en ce que**
le dispositif d'arrêt (10) présente, en tant qu'organe d'indexation (12), un ergot d'indexation déplaçable dans la direction axiale.

8. Centre d'usinage selon la revendication 7,
**caractérisé en ce que**
l'ergot d'indexation (12) du dispositif d'arrêt (10) est disposé dans la région du réceptacle (9) de la barre de traction (8).

9. Centre d'usinage selon l'une des revendications 2 à 8,
**caractérisé en ce que**
la barre de traction (8) est agencée fixement sur l'unité d'usinage (2) et que le réceptacle (9) ainsi que le dispositif d'arrêt (10) déblocable sont agencés sur l'unité d'alimentation (4).
